# EUROPEAN PATENT SPECIFICATION

(11) **EP 2 706 774 B1**
(45) Date of publication and mention of the grant of the patent: **30.10.2019**
(21) Application number: 12782433.2
(22) Date of filing: 28.02.2012
(51) Int. Cl.: H04W 24/02, H04B 7/06, H04W 24/10, H04W 28/06, H04L 1/16, H04L 1/18

(54) **METHOD AND SYSTEM FOR FEEDING BACK CHANNEL MEASUREMENT INFORMATION**
VERFAHREN UND SYSTEM ZUR RÜCKKOPPLUNG VON KANALMESSINFORMATIONEN
PROCÉDÉ ET SYSTÈME POUR RÉINJECTER DES INFORMATIONS DE MESURE DE CANAL

(30) Priority: 06.05.2011 CN 201110116668
(43) Date of publication of application: 12.03.2014
(73) Proprietor: ZTE Corporation, Shenzhen, Guangdong 518057 (CN)
(72) Inventor: LI, Nan, Shenzhen Guangdong 518057 (CN); LV, Kaiying, Shenzhen Guangdong 518057 (CN); SUN, Bo, Shenzhen Guangdong 518057 (CN); JIANG, Jing, Shenzhen Guangdong 518057 (CN); ZHANG, Li, Shenzhen Guangdong 518057 (CN)
(74) Representative: V.O.
(86) International application number: PCT/CN2012/071742
(87) International publication number: WO 2012/152106

(56) References cited:
- WO-A2-2008/002972
- CN-A- 1 993 910
- CN-A- 101 534 517
- CN-A- 101 895 372
- US-A1- 2010 260 138
- US-A1- 2010 271 992
- Ilsoo Sohn ET AL: "11ac Sounding Poll frame and VHT MIMO Control fields", IEEE P802.11 TGac IEEE SA MENTOR; 11-11-0378 11ac Sounding Poll frame and VHT MIMO Control fields, IEEE-SA MENTOR, PISCATAWAY, NJ USA, 15 March 2011 (2011-03-15), XP055180225, Retrieved from the Internet: URL:https://mentor.ieee.org/802.11/dcn/11/ 11-11-0378-02-00ac-comment-resolution-soun ding-poll-mimo-control-frame.doc [retrieved on 2015-03-30]

## Description

### TECHNICAL FIELD

The disclosure relates to the field of a Wireless Local Area Network (WLAN), in particular to a method and system for feeding back channel measurement information.

### BACKGROUND

With the development of a WLAN in the field of a wireless network at present, a requirement for WLAN coverage is growing, and a requirement for throughput becomes higher. A set of WLAN technical standards such as 802.11 a, 802.11b, 802.11 g is defined in an Institute for Electrical and Electronic Engineers 802.11 IEEE802.11 standard; then other subsequent task groups improve the conventional IEEE802.11 standard, for example: a 802.11 n task group proposes a High Throughput HT request to support data rate up to 600Mbps, a 802.11 ac task group further proposes a Very High Throughput VHT concept to improve data rate up to 1 Gbps by using a wider channel bandwidth.

In the IEEE802.11 standard, an Access Point AP and a plurality of STAtions STAs which are non-AP and associated with the AP form a Basic Service Set BSS. Four operation modes are defined in the IEEE802.11 standard: Distributed Coordination Function DCF, Point Coordination Function PCF, Enhanced Distributed Channel Access EDCA and Hybrid Coordination Function Controlled Channel Access HCCA modes. The DCF and EDCA modes both adopt a Carrier Sense Multiple Access CSMA mechanism with a function of Collision Avoidance CA, so as to allow a plurality of STAs to share wireless channels. However, a Difference between the two modes is that the EDCA mode is applied to frame transmission having Quality of Service QoS requirements.

In the WLAN, there are four Access Categories ACs: AC_VO, AC_VI, AC_BE and AC_BK. There are mapping relationships between User Priority UP of a Medium Access Control MAC Service Data Unit MSDU and the above four ACs. Each of the ACs corresponds to a set of EDCA parameter sets. And thus a radio frame having specific priority requirements adopts a parameter set contend channel of an AC corresponding to the UP, so as to obtain a Transmission Opportunity TXOP.

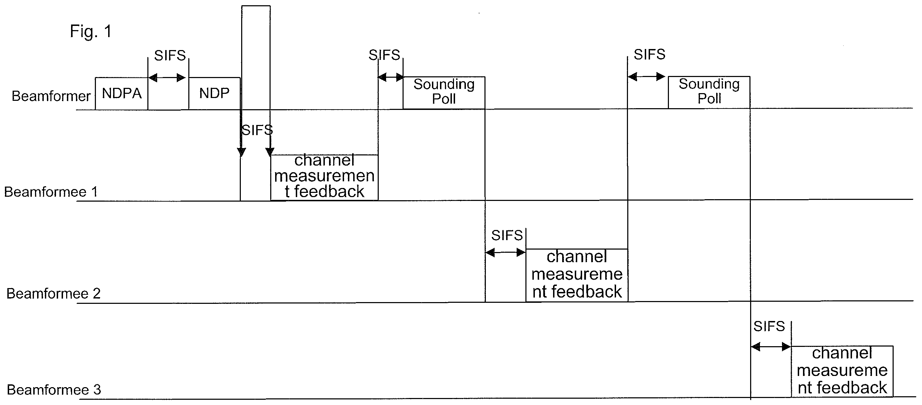

In the related art, a radio frame may be transmitted between the AP and the STA by using a multi-antenna and beam forming technique. For example, when performing downlink Multiple Input Multiple Output MIMO transmission, the AP may inform the STA to perform a channel measurement; after the measurement, the STA feeds back a measurement result to the AP; and the AP calculates a steering matrix based on the measurement result so as to optimize receipt of a receiving end. Generally, a part sending information by using the steering matrix is called a channel measurement information request part (beamformer), and a receiving part is called a channel measurement information feedback part (beamformee). The implement of this process is shown in Fig. 1, which probably includes: the beamformer sends a Null Data Packet Announcement NDPA frame for informing the beamformee to perform a channel measurement; after sending the NDPA frame completely, the beamformer waits a Short InterFrame Space SIFS and then sends a Null Data Packet NDP frame. The NDPA frame includes information of one or more beamformees which perform a channel measurement, and a first beamformee in the NDPA frame (such as beamformee 1 shown in Fig. 1) waits an SIFS and then sends a channel measurement feedback report frame, VHT Compressed Beamforming frame, after receiving the NDP frame; if the NDPA frame includes information of a plurality of beamformees, each beamformee except the first beamformee, such as beamformee 2 and beamformee 3 shown in Fig. 1, feeds back a channel measurement feedback report after receiving a sounding poll frame from the beamformer.

In the related art, the waiting an SIFS and then sending a VHT Compressed Beamforming frame is considered as a valid response to the NDPA frame. When the length of the VHT Compressed Beamforming frame is greater than the maximum length of an MAC Protocol Data Unit MPDU, the VHT Compressed Beamforming frame needs to be divided to a plurality of segments up to 8 segments, and each segment includes information for indicating the number of retained segments and whether the segment itself is a first segment. Then all the segments are sent by using one Aggregate MPDU A-MPDU. However, when a plurality of segments are sent by using one A-MPDU, if the beamformer only correctly receives a part of segments and does not make any processing, this case is only considered as transmission failure, unnecessary withdraw and retransmission will be caused, thereby wasting bandwidth resources. Particularly, when the NDPA frame is a first frame of the TXOP, if it is considered as transmission failure, the obtaining TXOP will fail, and the beamformer has to withdraw and contend channels again, thereby reducing network throughput.

It is noted that patent publication US 2010/271992 discloses a method that includes transmitting a calibration initiation frame from a first wireless communication device to a second wireless communication device that comprises a single space-time stream transmitter via a wireless communication medium.

It is further noted that patent publication US 2010/260138 discloses systems and techniques relating to wireless local are network devices.

It is also noted that the International patent publication WO 2008/002972 discloses techniques to support beamforming with implicit feedback or explicit feedback by having capabilities to transmit and receive sounding frames, respond to training request by sending a sounding frame, and respond to request for explicit feedback.

It is further noted that the document entitled "11 ac Sounding Poll frame and VHT MIMO Control fields" by Ilsoo Sohn et al. discloses that in sounding procedures, selective retransmission of segments in a VHT compressed beamforming frame is completed to increase transmission efficiency.

### SUMMARY

Accordingly, the main purpose of the disclosure is to provide a method and system for feeding back channel measurement information, so as to avoid unnecessary withdraw and retransmission, thereby saving bandwidth resources.

To this end, the technical scheme of the disclosure is realized as follows.

A method for feeding back channel measurement information is provided as recited in claim 1.

Another aspect of the disclosure provides a system for feeding back channel measurement information as recited in claim 8.

According the above solutions, the receiving station receives the control frame for the channel measurement from the sending station and sends channel measurement information to the sending station; the sending station receives all or a part of the channel measurement information to obtain a valid response frame responding to the control frame for the channel measurement. Through the above solutions, if the sending station only correctly receives a part of the channel measurement information, the sending station does not consider this transmission is failed but consider that the valid response frame responding to the control frame for the channel measurement is obtained, so as to avoid unnecessary withdraw and retransmission, thereby saving bandwidth resources.

### BRIEF DESCRIPTION OF THE DRAWINGS

Fig. 1 shows a diagram of a frame exchange sequence in conventional channel measurement;
Fig. 2 shows a flowchart of a method for feeding back channel measurement information according to the disclosure;
Fig. 3 shows a structure diagram of a system for feeding back channel measurement information according to the disclosure; and
Fig. 4 shows a diagram for transmitting segments according to the disclosure.

### DETAILED DESCRIPTION

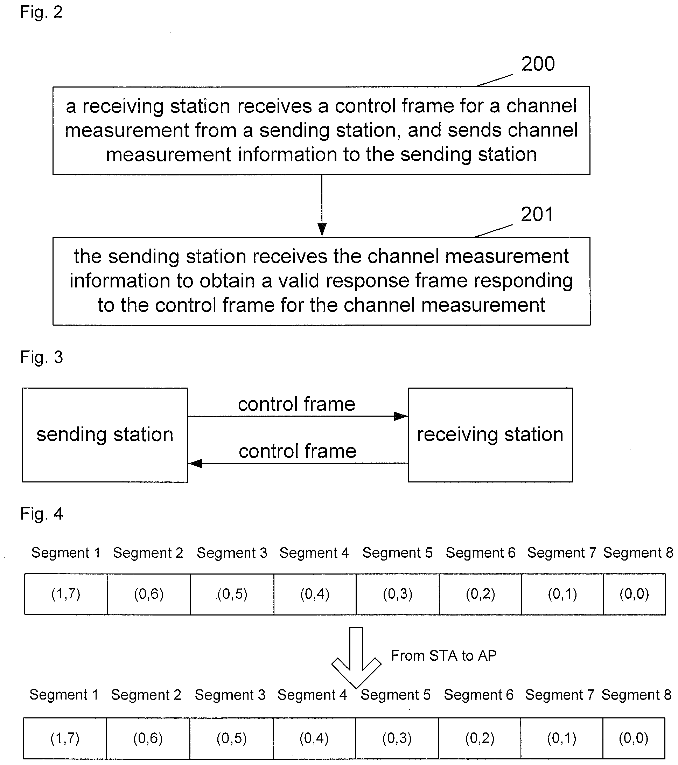

Fig. 2 shows a flowchart of a method for feeding back channel measurement information according to the disclosure. As shown in Fig. 2, this method includes the following steps.

Step 200: a receiving station receives a control frame for a channel measurement from a sending station, and sends channel measurement information to the sending station.

In this step, the control frame for the channel measurement includes: an announcement frame for the channel measurement, and/or a NDP frame, and/or a channel measurement information sounding poll frame.

The announcement frame for the channel measurement is a NDPA frame. The announcement frame includes identifier information of one or more receiving stations which need to perform the channel measurement. The NDP frame is used by the receiving station to perform the channel measurement.

Step 201: the sending station receives the channel measurement information to obtain a valid response frame responding to the control frame for the channel measurement.

In this step, the sending station obtains the valid response frame responding to the control frame for the channel measurement includes: the sending station correctly receives the channel measurement information from the receiving station; or, the sending station correctly receives a part of the channel measurement information from the receiving station, wherein the part of the channel measurement information may be at least one segment of the channel measurement information.

That is to say, in this method, if the sending station only correctly receives a part of segments, it does not consider that this transmission is failed, but considers that a valid response frame responding to the control frame for the channel measurement has been obtained, so as to avoid unnecessary withdrawn and retransmission, thereby saving bandwidth resources.

When the control frame for the channel measurement is used to initiate a TXOP, and when the sending station correctly receives all or a part of the channel measurement information from the receiving station, the TXOP is obtained successfully. After obtaining the TXOP successfully, this method of the disclosure may further include: when the sending station does not correctly receive all the segments from the receiving station, it sends the receiving station a channel measurement information sounding poll frame to request the receiving station to perform retransmission; when receiving the channel measurement information sounding poll frame, the receiving station retransmits a segment which is not correctly received or all the segments in the channel measurement information.

The disclosure also provides a system for feeding back channel measurement information corresponding to the method above, as shown in Fig. 3, the system at least includes a sending station and a receiving station.

The sending station is configured to send a control frame for a channel measurement to a sending station; and to correctly receive channel measurement information from the receiving station to obtain a valid response frame responding to the control frame for the channel measurement.

The receiving station is configured to receive the control frame for the channel measurement from the sending station, and to send the channel measurement information to the sending station.

The sending station may be configured, when all the segments from the receiving station are not correctly received, to send the receiving station a channel measurement information sounding poll frame to request the receiving station to perform retransmission. Correspondingly, the receiving station may be configured to receive the channel measurement information sounding poll frame from the sending station, and to retransmit a segment which is not correctly received or all the segments in the channel measurement information.

In the disclosure, the sending station may be an AP; there may be one or more receiving stations which may be a STA of a non-AP.

Hereinafter, the method of the disclosure will be described in detail with reference to embodiments.

### First Embodiment

An AP sends an STA1, STA2 and STA3 a NDPA frame to request each of them to perform a channel measurement and feed back a measurement result; the AP initiates a TXOP by using the NDPA frame including identifier information of the STA1, STA2 and STA3.

After sending the NDPA frame completely, the AP waits an SIFS and then sends a NDP frame. After the STA1, STA2 and STA3 receive the NDPA frame and the NDP frame, given that the first station STA 1 in the NDPA frame waits an SIFS after receiving the NDP frame completely, and then feeds back its channel measurement information, VHT Compressed Beamforming frame, to the AP.

Given that the length of the VHT Compressed Beamforming frame of the STA1 is greater than the maximum length of an MPDU, this VHT Compressed Beamforming frame needs to be segmented. In this embodiment, as shown in Fig. 4, the STA1 segments the VHT Compressed Beamforming frame into 8 segments which are all sent to the AP by using one A-MPDU, wherein each segment includes information for indicating the number of retained segments and whether the segment itself is a first segment, which is represented by (x, y) in Fig. 4, x is 0 or 1, where it means the segment itself is not the first segment when x is 0, and it means the segment itself is the first segment when x is 1; y is in a range of 0 to (N-1) and is used for indicating the number of retained segments, where N is the maximum number of allowable segments set by a system, herein, N=8.

After receiving the VHT Compressed Beamforming frame of the STA1, the AP determines that at least one segment of the VHT Compressed Beamforming frame is correctly received, then it is considered that the AP obtains a valid response frame responding to the NDPA frame, and that the TXOP is obtained successfully. It should be noted that it is related art to determine whether a segment is correctly received, therefore, its description is omitted.

If it is determined that there is a segment is not correctly received, the AP sends the STA1 a sounding poll frame to request it to perform retransmission, then the STA1 retransmits the segment which is not correctly received or all segments. That is to say, the sounding poll frame includes information which indicates the segment needs to be retransmitted or indicates all segments need to be retransmitted, there are many manners to carry out the above step, those skilled in the art should understand the manners which do not limit the protection scope of the disclosure. For example, if the maximum number of allowable segments set by the system is 8, when 7 segments are correctly received and x in each received segment is 0, the AP determines that only the first segment is not correctly received since the maximum number of allowable segments is 8; then the AP sends the sounding poll frame to the STA1 to request it to retransmit the first segment. If the correctly received segments include the first segment, the AP sends the sounding poll frame to the STA1 to request it to retransmit the segment which is not received correctly.

### Second Embodiment

After receiving a TXOP, an AP sends an STA1, STA2 and STA3 a NDPA frame to request each of them to perform a channel measurement and feed back a measurement result, wherein the NDPA frame includes identifier information of the STA1, STA2 and STA3.

After sending the NDPA frame completely, the AP waits an SIFS and then sends a NDP frame. After the STA1, STA2 and STA3 receive the NDPA frame and the NDP frame, given that the first station STA1 in the NDPA frame waits an SIFS after receiving the NDP frame completely, and then feeds back its channel measurement information, VHT Compressed Beamforming frame to the AP.

Given that the length of the VHT Compressed Beamforming frame of the STA1 is greater than the maximum length of an MPDU, this VHT Compressed Beamforming frame needs to be segmented. In this embodiment, as shown in Fig. 4, the STA1 segments the VHT Compressed Beamforming frame into 8 segments which are all sent to the AP by using one A-MPDU, wherein each segment includes information for indicating the number of retained segments and whether the segment itself is a first segment.

After receiving the VHT Compressed Beamforming frame of the STA1, the AP determines that at least one segment of the VHT Compressed Beamforming frame is correctly received, then it is considered that the AP obtains a valid response frame responding to the NDPA frame.

If it is determined that there is a segment is not correctly received, the AP sends a sounding poll frame to the STA1 to request it to perform retransmission, then the STA1 retransmits the segment which is not correctly received by the AP or all segments. For example, if the maximum number of allowable segments set by a system is 8, when 7 segments are correctly received and x in each received segment is 0, the AP determines that only the first segment is not correctly received since the maximum number of allowable segments is 8; then the AP sends the sounding poll frame to the STA1 to request it to retransmit the first segment. If the correctly received segments include the first segment, the AP sends the sounding poll frame to the STA1 to request it to retransmit the segment which is not received correctly. If none of segments are received correctly, the AP waits a PCF InterFrame Space PIFS and then retransmits the sounding poll frame to the STA1 to request it to retransmit all the segments. If a part of segments are not received correctly, the AP waits the SIFS and then retransmits the sounding poll frame to the STA1 to request it to retransmit the segment which is not correctly received.

### Third embodiment

After receiving a TXOP, an AP sends a NDPA frame to an STA1, STA2 and STA3 to request each of them to perform a channel measurement and feed back a measurement result, wherein the NDPA frame includes identifier information of the STA1, STA2 and STA3.

After sending the NDPA frame completely, the AP waits an SIFS and then sends a NDP frame. After the STA1, STA2 and STA3 receive the NDPA frame and the NDP frame, the first station STA1 in the NDPA frame waits an SIFS after receiving the NDP frame completely, and then feeds back its channel measurement information, VHT Compressed Beamforming frame, to the AP; the STA2 and STA3 feed back respective channel measurement information, VHT Compressed Beamforming frame, to the AP after receiving a sounding poll frame sent by the AP.

Given that the length of the VHT Compressed Beamforming frame of the STA2 is greater than the maximum length of an MPDU, this VHT Compressed Beamforming frame needs to be segmented. In this embodiment, as shown in Fig. 4, the STA2 segments the VHT Compressed Beamforming frame into 8 segments which are all sent to the AP by using one A-MPDU, wherein each segment includes information for indicating the number of retained segments and whether the segment itself is a first segment.

After receiving the VHT Compressed Beamforming frame of the STA2, the AP determines that at least one segment of the VHT Compressed Beamforming frame is correctly received, then it is considered that the AP obtains a valid response frame responding to the sounding poll frame.

If it is determined that there is a segment is not correctly received, the AP sends the sounding poll frame to the STA2 to request it to perform retransmission, then the STA2 retransmits the segment which is not correctly received by the AP or all segments. Particularly, if the maximum number of allowable segments set by a system is 8, when 7 segments are correctly received and x in each received segment is 0, the AP determines that only the first segment is not correctly received since the maximum number of allowable segments is 8; then the AP sends the sounding poll frame to the STA2 to request it to retransmit the first segment. If the correctly received segments include the first segment, the AP sends the sounding poll frame to the STA2 to request it to retransmit the segment which is not received correctly. If none of segments are received correctly, the AP waits a PIFS and then retransmits the sounding poll frame to the STA2 to request it to retransmit all the segments. If a part of segments are not received correctly, the AP waits the SIFS and then retransmits the sounding poll frame to the STA2 to request it to retransmit the segment which is not correctly received.

### Fourth Embodiment

An AP sends a NDPA frame to an STA1 to request it to perform a channel measurement and feed back a measurement result; the AP initiates a TXOP by using the NDPA frame including identifier information of the STA1.

After sending the NDPA frame completely, the AP waits an SIFS and then sends a NDP frame. After receiving the NDPA frame and the NDP frame, the STA1 waits an SIFS after receiving the NDP frame completely, and then feeds back its channel measurement information, VHT Compressed Beamforming frame ,to the AP.

After receiving the VHT Compressed Beamforming frame of the STA1, the AP determines that at least one segment of the VHT Compressed Beamforming frame is correctly received, then it is considered that the AP obtains a valid response frame responding to the NDPA frame, and that the TXOP is obtained successfully.

If it is determined that there is a segment is not correctly received, the AP sends a sounding poll frame to the STA1 to request it to perform retransmission, then the STA1 retransmits the segment which is not correctly received or all segments.

If the AP has obtained the TXOP, it sends the NDPA frame to the STA1 to request it to perform the channel measurement and feed back the measurement result, wherein the NDPA frame includes the identifier information of the STA1. After sending the NDPA frame completely, the AP waits the SIFS and then sends the NDP frame. After receiving the NDP frame completely, the STA1 waits the SIFS and then feeds back its channel measurement information, VHT Compressed Beamforming frame, to the AP. After receiving the VHT Compressed Beamforming frame of the STA1, the AP determines that at least one segment of the VHT Compressed Beamforming frame is correctly received, then it is considered that the AP obtains the valid response frame responding to the NDPA frame. If it is determined that there is a segment is not correctly received, the AP sends the sounding poll frame to the STA1 to request it to perform retransmission, then the STA1 retransmits the segment which is not correctly received by the AP or all segments. If none of segments are received correctly, the AP waits a PIFS and then retransmits the sounding poll frame to the STA1 to request it to retransmit all the segments. If a part of segments are not received correctly, the AP waits the SIFS and then retransmits the sounding poll frame to the STA1 to request it to retransmit the segment which is not correctly received.

### Fifth embodiment

An AP sends a NDPA frame to an STA1, STA2 and STA3 to request each of them to perform a channel measurement and feed back a measurement result; the AP initiates a TXOP by using the NDPA frame including identifier information of the STA1, STA2 and STA3.

After sending the NDPA frame completely, the AP waits an SIFS and then sends a NDP frame. After the STA1, STA2 and STA3 receive the NDPA frame and the NDP frame, the first station STA1 in the NDPA frame waits an SIFS after receiving the NDP frame completely, and then feeds back its channel measurement information, VHT Compressed Beamforming frame, to the AP.

Given that the length of the VHT Compressed Beamforming frame of the STA1 is greater than the maximum length of an MPDU, this VHT Compressed Beamforming frame needs to be segmented. In this embodiment, the STA1 segments the VHT Compressed Beamforming frame into 5 segments which are all sent to the AP by using one A-MPDU, wherein each segment includes information for indicating the number of retained segments and whether the segment itself is a first segment.

After receiving the VHT Compressed Beamforming frame of the STA1, the AP determines that at least one segment of the VHT Compressed Beamforming frame is correctly received, then it is considered that the AP obtains a valid response frame responding to the NDPA frame, and that the TXOP is obtained successfully.

If it is determined that there is a segment is not correctly received, the AP sends a sounding poll frame to the STA1 to request it to perform retransmission, then the STA1 retransmits the segment which is not correctly received by the AP or all segments.

After receiving the TXOP, the AP continually sends the sounding poll frame to the STA2 to request it to feed back its channel measurement information. After receiving the sounding poll frame sent by the AP, the STA2 feeds back its channel measurement information, VHT Compressed Beamforming frame, to the AP.

If the length of the VHT Compressed Beamforming frame of the STA2 is greater than the maximum length of the MPDU, this VHT Compressed Beamforming frame needs to be segmented. In this embodiment, the STA2 segments the VHT Compressed Beamforming frame into 6 segments which are all sent to the AP by using one A-MPDU, wherein each segment includes information for indicating the number of retained segments and whether the segment itself is a first segment.

After receiving the VHT Compressed Beamforming frame of the STA2, the AP determines that at least one segment of the VHT Compressed Beamforming frame is correctly received, then it is considered that the AP obtains a valid response frame corresponding to the sounding poll frame.

If it is determined that there is a segment is not correctly received, the AP sends the sounding poll frame to the STA2 to request it to perform retransmission, then the STA2 retransmits the segment which is not correctly received by the AP or all segments. If none of segments are received correctly, the AP waits a PIFS and then retransmits the sounding poll frame to the STA2 to request it to retransmit all the segments. If a part of segments are not received correctly, the AP waits the SISF and then retransmits the sounding poll to the STA2 to request it to retransmit the segment which is not correctly received.

The above descriptions are only exemplary embodiments of the disclosure, rather than limit the disclosure. The scope of protection is defined by the appended claims.

## Claims

1. A method for feeding back channel measurement information, comprising:
receiving (200), by a receiving station, a control frame for a channel measurement from a sending station, and sending channel measurement information to the sending station;
correctly receiving (201), by the sending station, a part of the channel measurement information to obtain a valid response frame responding to the control frame for the channel measurement;
**characterized in that** the method further comprises:
sending, by the sending station, a channel measurement information sounding poll frame to the receiving station to request the receiving station to perform retransmission when the sending station determines that not all segments of the channel measurement information from the receiving station are correctly received, which specifically comprises:
sending, by the sending station, the channel measurement information sounding poll frame to the receiving station to request the receiving station to retransmit a first segment when determining that only the first segment is not correctly received;
sending, by the sending station, the channel measurement information sounding poll frame to the receiving station to request the receiving station to retransmit a segment which is not received correctly when determining that the first segment is correctly received;
waiting, by the sending station, a Point Coordination Function InterFrame Space, PIFS, and then sending the channel measurement information sounding poll frame to the receiving station to request the receiving station to retransmit all segments when determining that none of the segments is received correctly;
waiting, by the sending station, a Short InterFrame Space, SIFS, and then sending the channel measurement information sounding poll frame to the receiving station to request the receiving station to retransmit a part of segments which are not received correctly when determining that the part of segments are not received correctly, the PIFS and the SIFS being concepts defined in Institute for Electrical and Electronic Engineers 802.11 standard.

2. The method according to claim 1, wherein the control frame for the channel measurement comprises: an announcement frame for the channel measurement, and/or a Null Data Packet, NDP, frame, and/or a channel measurement information sounding poll frame.

3. The method according to claim 2, wherein an announcement frame is a Null Data Packet Announcement, NDPA, frame which includes identifier information of one or more receiving stations which need to perform the channel measurement; and
a NDP frame is used by the receiving station to perform the channel measurement.

4. The method according to claim 1, wherein when the control frame for the channel measurement is used to initiate a Transmission Opportunity TXOP, and when the sending station correctly receives the channel measurement information or the part of the channel measurement information from the receiving station, the TXOP is obtained successfully.

5. The method according to any one of claims 1 to 4, wherein the part of the channel measurement information comprises at least one segment of the channel measurement information.

6. The method according to claim 1, further comprising:
retransmitting, by the receiving station, a segment which is not correctly received or all the segments in the channel measurement information after receiving the channel measurement information sounding poll frame.

7. The method according to claim 5, wherein the valid response frame is a channel measurement feedback report frame.

8. A system for feeding back channel measurement information, at least comprising a sending station and a receiving station, wherein:
the sending station is configured to send a control frame for a channel measurement to the receiving station, and to correctly receive a part of the channel measurement information from the receiving station to obtain a valid response frame responding to the control frame for the channel measurement; and
the receiving station is configured to receive the control frame for the channel measurement from the sending station, and to send the channel measurement information to the sending station;
wherein the sending station is further configured to, when not all segments of the channel measurement information from the receiving station are correctly received, send a channel measurement information sounding poll frame to the receiving station to request the receiving station to perform retransmission,
**characterized in that** the sending station is specifically configured to:
send the channel measurement information sounding poll frame to the receiving station to request the receiving station to retransmit a first segment when determining that only the first segment is not correctly received;
send the channel measurement information sounding poll frame to the receiving station to request the receiving station to retransmit a segment which is not received correctly when determining that the first segment is correctly received;
wait a Point Coordination Function InterFrame Space, PIFS, and then send the channel measurement information sounding poll frame to the receiving station to request the receiving station to retransmit all segments when determining that none of the segments is received correctly;
wait a Short InterFrame Space, SIFS, and then send the channel measurement information sounding poll frame to the receiving station to request the receiving station to retransmit a part of segments which are not received correctly when determining that the part of segments are not received correctly, the PIFS and the SIFS being concepts defined in Institute for Electrical and Electronic Engineers 802.11 standard.

9. The system according to claim 8, wherein the receiving station is correspondingly configured to receive the channel measurement information sounding poll frame, and to retransmit a segment which is not correctly received or all the segments in the channel measurement information.

10. The system according to claim 8, wherein when the control frame for the channel measurement is used to initiate a Transmission Opportunity TXOP, and when the sending station correctly receives the channel measurement information or the part of the channel measurement information from the receiving station, the TXOP is obtained successfully.

11. The system according to claim 8, 9 or 10, wherein the sending station is an Access Point AP, and the receiving station is a STAtion STA which is of a non-AP; and the number of the receiving stations is one or more.

12. The system according to any one of claims 8-11, wherein the part of the channel measurement information comprises at least one segment of the channel measurement information.

## Patentansprüche

1. Verfahren zum Rückführen von Kanalmessinformationen, umfassend:
Empfangen (200) eines Control Frames für eine Kanalmessung von einer Sendestation durch eine Empfangsstation und Senden von Kanalmessinformationen an die Sendestation;
richtiges Empfangen (201) eines Teils der Kanalmessinformationen durch die Sendestation, um einen gültigen Response Frame beim Antworten auf den Control Frame für die Kanalmessung zu erhalten;
**dadurch gekennzeichnet, dass** das Verfahren ferner Folgendes umfasst:
Senden eines Sounding-Poll-Frames für Kanalmessinformationen durch die Sendestation an die Empfangsstation, um die Empfangsstation aufzufordern, ein erneutes Übertragen durchzuführen, wenn die Sendestation bestimmt, dass nicht alle Segmente der Kanalmessinformationen von der Empfangsstation richtig empfangen werden, das speziell Folgendes umfasst:
Senden des Sounding-Poll-Frames für Kanalmessinformationen durch die Sendestation an die Empfangsstation, um die Empfangsstation aufzufordern, ein erstes Segment erneut zu übertragen, wenn bestimmt wird, dass nur das erste Segment nicht richtig empfangen wird;
Senden des Sounding-Poll-Frames für Kanalmessinformationen durch die Sendestation an die Empfangsstation, um die Empfangsstation aufzufordern, ein Segment erneut zu übertragen, das nicht richtig empfangen wird, wenn bestimmt wird, dass das erste Segment richtig empfangen wird;
Warten einer Point Coordination Function InterFrame Space, PIFS, durch die Sendestation und anschließendes Senden des Sounding-Poll-Frames für Kanalmessinformationen an die Empfangsstation, um die Empfangsstation aufzufordern, alle Segmente erneut zu übertragen, wenn bestimmt wird, dass keines der Segmente richtig empfangen wird;
Warten einer Short InterFrame Space (SIFS) durch die Sendestation und anschließendes Senden des Sounding-Poll-Frames für Kanalmessinformationen an die Empfangsstation, um die Empfangsstation aufzufordern, einen Teil von Segmenten, die nicht richtig empfangen werden, erneut zu übertragen, wenn bestimmt wird, dass der Teil von Segmenten nicht richtig empfangen wird, wobei PIFS und SIFS Konzepte sind, die in der Norm 802.11 des Institute for Electrical and Electronic Engineers definiert sind.

2. Verfahren nach Anspruch 1, wobei der Control Frame für die Kanalmessung Folgendes umfasst: einen Announcement Frame für die Kanalmessung und/oder ein Null Data Packet, NDP, Frame und/oder einen Sounding-Poll-Frame für Kanalmessinformationen.

3. Verfahren nach Anspruch 2, wobei ein Announcement Frame ein Null Data Packet Announcement, NDPA, ist, der Identifizierungsinformationen von einer oder mehreren Empfangsstationen enthält, die die Kanalmessung durchführen müssen; und
die Empfangsstation einen NDP-Frame verwendet, um die Kanalmessung durchzuführen.

4. Verfahren nach Anspruch 1, wobei, wenn der Control Frame für die Kanalmessung verwendet wird, um eine Übertragungsmöglichkeit TXOP zu initiieren, und wenn die Sendestation die Kanalmessinformationen oder den Teil der Kanalmessinformationen von der Empfangsstation richtig empfängt, TXOP erfolgreich erhalten wird.

5. Verfahren nach einem der Ansprüche 1 bis 4, wobei der Teil der Kanalmessinformationen wenigstens ein Segment der Kanalmessinformationen umfasst.

6. Verfahren nach Anspruch 1, ferner umfassend:
erneutes Übertragen eines Segments, das nicht richtig empfangen wurde, oder aller Segmente in den Kanalmessinformationen durch die Empfangsstation nach dem Empfang des Sounding-Poll-Frames für Kanalmessinformationen.

7. Verfahren nach Anspruch 5, wobei der gültige Response Frame ein Feedback-Report-Frame für Kanalmessung ist.

8. System zum Rückführen von Kanalmessinformationen, das wenigstens eine Sendestation und eine Empfangsstation umfasst, wobei:
die Sendestation konfiguriert ist, um einen Control Frame für eine Kanalmessung an die Empfangsstation zu senden und einen Teil der Kanalmessinformationen von der Empfangsstation richtig zu empfangen, um einen gültigen Response Frame zu erhalten, der auf den Control Frame für die Kanalmessung antwortet; und
die Empfangsstation konfiguriert ist, um den Control Frame für die Kanalmessung von der Sendestation zu empfangen und die Kanalmessinformationen an die Sendestation zu senden;
wobei die Sendestation ferner konfiguriert ist, um, wenn nicht alle Segmente der Kanalmessinformationen von der Empfangsstation richtig empfangen wurden, einen Sounding-Poll-Frames für Kanalmessinformationen an die Empfangsstation zu senden, um die Empfangsstation aufzufordern, ein erneutes Übertragen durchzuführen,
**dadurch gekennzeichnet, dass** die Sendestation speziell konfiguriert ist, um:
den Sounding-Poll-Frame für Kanalmessinformationen an die Empfangsstation zu senden, um die Empfangsstation aufzufordern, ein erstes Segment erneut zu übertragen, wenn bestimmt wird, dass nur das erste Segment nicht richtig empfangen wird;
den Sounding-Poll-Frame für Kanalmessinformationen an die Empfangsstation zu senden, um die Empfangsstation aufzufordern, ein Segment erneut zu übertragen, das nicht richtig empfangen wird, wenn bestimmt wird, dass das erste Segment richtig empfangen wird;
eine Point Coordination Function InterFrame Space, PIFS zu warten und anschließend den Sounding-Poll-Frame für Kanalmessinformationen an die Empfangsstation zu senden, um die Empfangsstation aufzufordern, alle Segmente erneut zu übertragen, wenn bestimmt wird, dass keines der Segmente richtig empfangen wird;
eine Short InterFrame Space (SIFS) zu warten und anschließend den Sounding-Poll-Frame für Kanalmessinformationen an die Empfangsstation zu senden, um die Empfangsstation aufzufordern, einen Teil von Segmenten, die nicht richtig empfangen werden, erneut zu übertragen, wenn bestimmt wird, dass der Teil von Segmenten nicht richtig empfangen wird, wobei PIFS und SIFS Konzepte sind, die in der Norm 802.11 des Institute for Electrical and Electronic Engineers definiert sind.

9. System nach Anspruch 8, wobei die Empfangsstation entsprechend konfiguriert ist, um den Sounding-Poll-Frame für Kanalmessinformationen zu empfangen und ein Segment, das nicht richtig empfangen wurde, oder alle Segmente in den Kanalmessinformationen erneut zu übertragen.

10. System nach Anspruch 8, wobei, wenn der Control Frame für die Kanalmessung verwendet wird, um eine Übertragungsmöglichkeit TXOP zu initiieren, und wenn die Sendestation die Kanalmessinformationen oder den Teil der Kanalmessinformationen von der Empfangsstation richtig empfängt, TXOP erfolgreich erhalten wird.

11. System nach Anspruch 8, 9 oder 10, wobei die Sendestation ein Access Point AP ist und die Empfangsstation eine STAtion STA ist, die von einem Nicht-AP ist; und die Anzahl der Empfangsstationen eins oder mehr ist.

12. System nach einem der Ansprüche 8 bis 11, wobei der Teil der Kanalmessinformationen wenigstens ein Segment der Kanalmessinformationen umfasst.

## Revendications

1. Procédé pour réinjecter des informations de mesure de canal, comprenant :
de recevoir (200), par une station de réception, une trame de commande pour une mesure de canal depuis une station d'envoi, et d'envoyer des informations de mesure de canal à la station d'envoi ;
de recevoir correctement (201), par la station d'envoi, une partie des informations de mesure de canal pour obtenir une trame de réponse valide répondant à la trame de commande pour la mesure de canal ;
**caractérisé en ce que** le procédé comprend en outre :
d'envoyer, par la station d'envoi, une trame de sondage d'informations de mesure de canal à la station de réception pour demander à la station de réception de réaliser une retransmission quand la station d'envoi détermine que les segments des informations de mesure de canal venant de la station de réception ne sont pas tous correctement reçus, qui comprend précisément ;
d'envoyer, par la station d'envoi, la trame de sondage d'informations de mesure de canal à la station de réception pour demander à la station de réception de retransmettre un premier segment lors de la détermination que seulement le premier segment n'est pas correctement reçu ;
d'envoyer, par la station d'envoi, la trame de sondage d'informations de mesure de canal à la station de réception pour demander à la station de réception de retransmettre un segment qui n'est pas reçu correctement lors de la détermination que le premier segment est correctement reçu ;
d'attendre, par la station d'envoi, un espace intertrame de fonction de coordination par point PIFS, et d'envoyer ensuite la trame de sondage d'informations de mesure de canal à la station de réception pour demander à la station de réception de retransmettre tous les segments lors de la détermination qu'aucun des segments n'est reçu correctement ;
d'attendre, par la station d'envoi, un espace intertrame court, SIFS, et d'envoyer ensuite la trame de sondage d'informations de mesure de canal à la station de réception pour demander à la station de réception de retransmettre une partie des segments qui ne sont pas reçus correctement lors de la détermination que la partie des segments ne sont reçus correctement, le PIFS et le SIFS étant des concepts définis dans la norme 802.11 de l'Institute for Electrical and Electronic Engineers.

2. Procédé selon la revendication 1, dans lequel la trame de commande pour la mesure de canal comprend : une trame d'annonce pour la mesure de canal, et/ou une trame de paquet de données nul, NDP, et/ou une trame de sondage d'informations de mesure de canal.

3. Procédé selon la revendication 2, dans lequel une trame d'annonce est une trame d'annonce de paquet de données nul, NDPA, qui inclut des informations d'identificateur d'une ou plusieurs stations de réception qui on besoin de réaliser la mesure de canal ; et
une trame de NDP est utilisée par la station de réception pour réaliser la mesure de canal.

4. Procédé selon la revendication 1, dans lequel quand la trame de commande pour la mesure de canal est utilisée pour initier une opportunité de transmission, TXOP, et quand la station d'envoi reçoit correctement les informations de mesure de canal ou la partie des informations de mesure de canal depuis la station de réception, la TXOP est obtenue avec succès.

5. Procédé selon l'une quelconque des revendications 1 à 4, dans lequel la partie des informations de mesure de canal comprend au moins un segment des informations de mesure de canal.

6. Procédé selon la revendication 1, comprenant en outre :
de retransmettre, par la station de réception, un segment qui n'est pas correctement reçu ou tous les segments dans les informations de mesure de canal après réception de la trame de sondage d'informations de mesure de canal.

7. Procédé selon la revendication 5, dans lequel la trame de réponse valide est une trame de rapport de rétroaction de mesure de canal.

8. Système pour réinjecter des informations de mesure de canal, comprenant au moins une station d'envoi et une station de réception, dans lequel :
la station d'envoi est configurée pour envoyer une trame de commande pour une mesure de canal à la station de réception, et pour recevoir correctement une partie des informations de mesure de canal depuis la station de réception pour obtenir une trame de réponse valide répondant à la trame de commande pour la mesure de canal ; et
la station de réception est configurée pour recevoir la trame de commande pour la mesure de canal depuis la station d'envoi, et pour envoyer les informations de mesure de canal à la station d'envoi ;
dans lequel la station d'envoi est en outre configurée pour, quand les segments des informations de mesure de canal venant de la station de réception ne sont pas tous correctement reçus, envoyer une trame de sondage d'informations de mesure de canal à la station de réception pour demander à la station de réception de réaliser la retransmission,
**caractérisé en ce que** la station d'envoi est spécifiquement configurée pour :
envoyer la trame de sondage d'informations de mesure de canal à la station de réception pour demander à la station de réception de retransmettre un premier segment lors de la détermination que seulement le premier segment n'est pas correctement reçu ;
envoyer la trame de sondage d'informations de mesure de canal à la station de réception pour demander à la station de réception de retransmettre un segment qui n'est pas reçu correctement lors de la détermination que le premier segment est correctement reçu ;
attendre un espace intertrame de fonction de coordination par point PIFS, et envoyer ensuite la trame de sondage d'informations de mesure de canal à la station de réception pour demander à la station de réception de retransmettre tous les segments lors de la détermination qu'aucun des segments n'est reçu correctement ;
attendre un espace intertrame court, SIFS, et envoyer ensuite la trame de sondage d'informations de mesure de canal à la station de réception pour demander la station de réception de retransmettre une partie des segments qui ne sont pas reçus correctement lors de la détermination que la partie des segments ne sont reçus correctement, le PIFS et le SIFS étant des concepts définis dans la norme 802.11 de l'Institute for Electrical and Electronic Engineers.

9. Système selon la revendication 8, dans lequel la station d'envoi est configurée de manière correspondante pour recevoir la trame de sondage d'informations de mesure de canal, et pour retransmettre un segment qui n'est pas correctement reçu ou tous les segments dans les informations de mesure de canal.

10. Système selon la revendication 8, dans lequel quand la trame de commande pour la mesure de canal est utilisée pour initier une opportunité de transmission TXOP, et quand la station d'envoi reçoit correctement les informations de mesure de canal ou la partie des informations de mesure de canal depuis la station de réception, la TXOP est obtenue avec succès.

11. Système selon la revendication 8, 9 ou 10, dans lequel la station d'envoi est un point d'accès AP, et la station de réception est une station STA qui est d'un non-AP ; et le nombre de stations de réception est de un ou plus.

12. Système selon l'une quelconque des revendications 8-11, dans lequel la partie des informations de mesure de canal comprend au moins un segment des informations de mesure de canal.
